# EUROPEAN PATENT APPLICATION

(11) **EP 3 418 922 A1**
(43) Date of publication of application: **26.12.2018**
(21) Application number: 16890663.4
(22) Date of filing: 09.12.2016
(51) Int. Cl.: G06F 17/50, B32B 5/28, B64C 1/00

(54) **STRUCTURE DESIGNING METHOD AND STRUCTURE**

(30) Priority: 15.02.2016 JP 2016026262
(71) Applicant: Mitsubishi Heavy Industries, Ltd., Tokyo 108-8215 (JP); Kuraray Co., Ltd., Kurashiki-shi, Okayama 710-0801 (JP)
(72) Inventor: KAMO, Sota, Tokyo 108-8215 (JP); TAKAGI, Kiyoka, Tokyo 108-8215 (JP); ABE, Toshio, Tokyo 108-8215 (JP); SHIMIZU, Takayuki, Tokyo 108-8215 (JP); AZUSAWA, Naoto, Tokyo 108-8215 (JP); SHITANI, Tooru, Nagoya-shi Aichi 455-0024 (JP); NAKAMURA, Takuji, Osaka-shi Osaka 530-8611 (JP); KUSUDO, Kazumasa, Okayama-shi Okayama 702-8601 (JP); KOBAYASHI, Toshiaki, Okayama-shi Okayama 702-8601 (JP)
(74) Representative: Henkel, Breuer & Partner
(86) International application number: PCT/JP2016/086792
(87) International publication number: WO 2017/141526

(57) **Abstract**

Disclosed is structure designing method for installing a composite material including a polyarylate fiber and a resin in a structure, such as a vertical tail fin, as a vibration damping member, the method comprising: a step S3 for analyzing design performance for when the composite material is installed in a plurality of divided installation regions; a step S4 for selecting the divided installation region on the basis of the analysis result; a step S6 for analyzing design performance by changing the layering position of the composite material in the thickness direction of the structure; a step S7 for selecting the layering position on the basis of the analysis result; a step S9 for analyzing design performance by changing the fiber direction of the polyarylate fiber included in the composite material; a step S10 for selecting the fiber direction on the basis of the analysis result; and a step S12 for determining whether the design performance of the structure as derived from the design parameters selected in said selection steps satisfies a required performance required of the structure.

## Description

### Field

The present invention relates to a method for designing a structure in which a composite material is arranged, and the structure.

### Background

Conventionally, there has been known a composite structure having both excellent heat radiation characteristics and rigidity, the composite structure being composed of a fiber-reinforced resin material and a metal member that are joined with each other (see Patent Literature 1, for example).

### Citation List

### Patent Literature

Patent Literature 1: Japanese Patent Application Laid-open No. 2008-230237

### Summary

### Technical Problem

Incidentally, examples of the structure include an aircraft body, and the turbulence of an air current causes a vibration on the aircraft body. When the vibration is caused in the aircraft body, a load is applied to a vibrating part and hence, in order to improve the rigidity of the part to which the load is applied, it is necessary to increase the thickness of the part to be improved in rigidity. However, when the thickness of the part is increased, the weight of the aircraft body increases. Accordingly, in order to suppress the vibration that is caused in the aircraft body, there has been developed the arrangement of a damping material in the aircraft body. As the damping material, for example, a composite material including polyarylate fibers and a resin is available. Here, when a damping material composed of a composite material is arranged in the structure such as the aircraft body, it is necessary to satisfy performance requirements required for the structure. On the other hand, when excessive damping materials are arranged in the structure, there exists the possibility of increasing an aircraft body weight.

Accordingly, it is an object of the present invention to provide a method for designing a structure in which the damping material composed of a composite material can be appropriately arranged, and the structure.

### Solution to Problem

A method for designing a structure according to the present invention is a method for designing a structure in which a composite material including fibers and a resin is arranged as a damping material in a structure body. The method includes a first design performance analyzing step of analyzing a design performance of the structure when the composite material is arranged in at least one of a plurality of divided arrangement areas into which a composite material arrangement area of the structure in which the composite material is arrangeable is divided, performance requirements required for the structure being set in advance; a divided arrangement area selecting step of selecting the divided arrangement area in which the composite material is to be arranged, based on analysis results of the first design performance analyzing step; a second design performance analyzing step of analyzing a design performance of the structure when the composite material is arranged in each of lamination positions different from each other in a thickness direction of the structure; a lamination position selecting step of selecting the lamination position where the composite material is to be arranged, based on analysis results of the second design performance analyzing step; a third design performance analyzing step of analyzing a design performance of the structure when the composite material is arranged with a fiber direction of the fibers included in the composite material different; a fiber direction selecting step of selecting the fiber direction of the fibers based on analysis results of the third design performance analyzing step; and a performance determining step of determining whether a design performance of the structure satisfies the performance requirements, the design performance being derived from design parameters including at least the divided arrangement area selected at the divided arrangement area selecting step, the lamination position selected at the lamination position selecting step, and the fiber direction selected at the fiber direction selecting step.

According to the above-mentioned configuration, it is possible to select the divided arrangement area, the lamination position, and the fiber direction that satisfy the performance requirements, thus appropriately arranging the composite material (damping material) in the structure. Consequently, it is possible to damp appropriately the vibration of the structure with the use of the composite material, and enhance the damping performance of the structure, thus reducing the fatigue due to the vibration of the structure and increasing the constant failure rate period of the structure. Furthermore, it is possible to suppress the arrangement of excessive composite materials in the structure thus suppressing the increase in weight of the structure. Here, it is possible to change the order of the divided arrangement area selecting step, the lamination position selecting step, and the fiber direction selecting step.

The damping material preferably includes polyarylate fibers as the fibers.

With that configuration, the polyarylate fiber is used, thus providing the damping material with high strength and high elasticity and hence, it is possible to improve the damping property of the damping material with respect to the vibration.

It is preferable that at the second design performance analyzing step, the composite material is arranged in the lamination positions different from each other in the divided arrangement area selected at the divided arrangement area selecting step, and at the third design performance analyzing step, the fiber direction of the fibers is different in the divided arrangement area selected at the divided arrangement area selecting step and in the lamination position selected at the lamination position selecting step.

With this configuration, the divided arrangement area selecting step, the lamination position selecting step, and the fiber direction selecting step are performed in the order given above, thus selecting the design parameters in descending order of design sensitivity.

The lamination positions preferably include an outside-surface lamination position that is a position located on the outside surface of a structural member constituting the structure, and an inside lamination position that is a position located inside the structural member.

With this configuration, it is possible to evaluate a design performance in the case where the composite material is arranged on the outside surface of a structural member, or a design performance in the case where the composite material is arranged inside the structural member. Consequently, when the design performance satisfies the performance requirements, for example, it is possible to cause the composite material to adhere to the outside surface of an existing structural member, or laminate the composite material inside the structural member.

It is preferable that the performance requirements include a plurality of performance requirement parameters, and the plurality of performance requirement parameters include at least one of a strength of the structure, a rigidity of the structure, and a damping factor of the structure with respect to a vibration.

With this configuration, it is possible to acquire the strength of the structure, the rigidity of the structure, and the damping factor of the structure with respect to the vibration that satisfy the performance requirements. Here, each of the performance requirement parameters is a parameter high in sensitivity with respect to the design parameter selected at the divided arrangement area selecting step, the lamination position selecting step, or the fiber direction selecting step.

A structure of the present invention includes a structure body composed of a first composite material, and a second composite material arranged in the structure body, the second composite material including fibers and a resin. The second composite material is interposed in the first composite material as a damping material.

With this configuration, a second composite material that constitutes a damping material is interposed in the first composite material, thus acquiring a structure composed of the structure body and the second composite material that are integrally formed with each other. Consequently, it is possible to acquire the structure having the damping performance.

It is preferable that a plurality of the second composite materials are spaced apart from each other at predetermined intervals in a thickness direction of the first composite material, and fiber directions of the fibers of the plurality of second composite materials intersect each other.

Whit this configuration, it is possible to arrange the plurality of second composite materials in a separated manner from each other in the thickness direction of the first composite material, thus suppressing the increase in rigidity difference between the first composite material and the second composite materials. Furthermore, the second composite materials are formed in such a manner that the respective fiber directions of the second composite materials are properly made to be different from each other, thus adjusting the property of isotropy or anisotropy. For example, when the second composite materials are made up of two layers, the respective fiber directions of the second composite materials may be made to be different from each other so as to have an angle ±45°, ±60°, or the like with respect to a predetermined angle.

Another structure of the present invention includes a structure body composed of a first composite material, and a second composite material arranged in the structure body, the second composite material including fibers and a resin. The second composite material is arranged on an outside surface of the first composite material as a damping material.

With this configuration, it is possible to arrange the second composite material serving as a damping material on the outside surface of the first composite material. Consequently, it is possible to acquire a simple configuration such that the second composite material adheres to the existing structure body, thus achieving a structure having the damping performance.

The damping material preferably includes polyarylate fibers as the fibers.

With this configuration, the polyarylate fiber is used, thus causing the damping material to have high strength and high elasticity and hence, it is possible to improve the damping property with respect to the vibration.

It is preferable that the structure is a wing body, and a fiber direction of the fibers included in the second composite material has a vector whose magnitude is large in a wing length direction of the wing body, and small in a wing span direction orthogonal to the wing length direction.

With this configuration, it is possible to set the fiber direction of the fibers included in the second composite material along the wing length direction of the wing body, thus causing the wing body to exhibit appropriately a function as the damping material of the second composite material.

### Brief Description of Drawings

FIG. 1 is an exploded perspective view illustrating an aircraft body around a tail unit to which a method for designing a structure according to the present embodiment is applied.
FIG. 2 is a sectional view illustrating a composite material according to the present embodiment.
FIG. 3 is a flowchart with respect to the method for designing the structure according to the present embodiment.
FIG. 4 is an explanatory view illustrating a plurality of divided arrangement areas of a wing body according to the present embodiment.
FIG. 5 is an explanatory view illustrating lamination positions of the wing body according to the present embodiment.
FIG. 6 is a graph illustrating analysis results obtained by the method for designing the structure according to the present embodiment.

### Description of Embodiments

Hereinafter, an embodiment according to the present invention is specifically explained based on drawings. Here, the present invention is not limited to the embodiment. Furthermore, configurational features in the following embodiment include a part that can easily be effected by those skilled in the art, or parts substantially identical with each other. Furthermore, the configurational features described below can be optionally combined with each other, and when a plurality of embodiments are conceivable, the embodiments can be combined with each other.

### Embodiment

A method for designing a structure according to the present embodiment is, for example, a method for designing a structure, such as an aircraft body. To be more specific, the method for designing the structure evaluates whether the structure satisfies performance requirements, when a composite material including polyarylate fibers and a resin is used as a damping material, and the damping material is arranged in a structure body. First of all, prior to the explanation of the method for designing the structure, the explanation is made with respect to the structure body, and the composite material as the damping material arranged in the structure body.

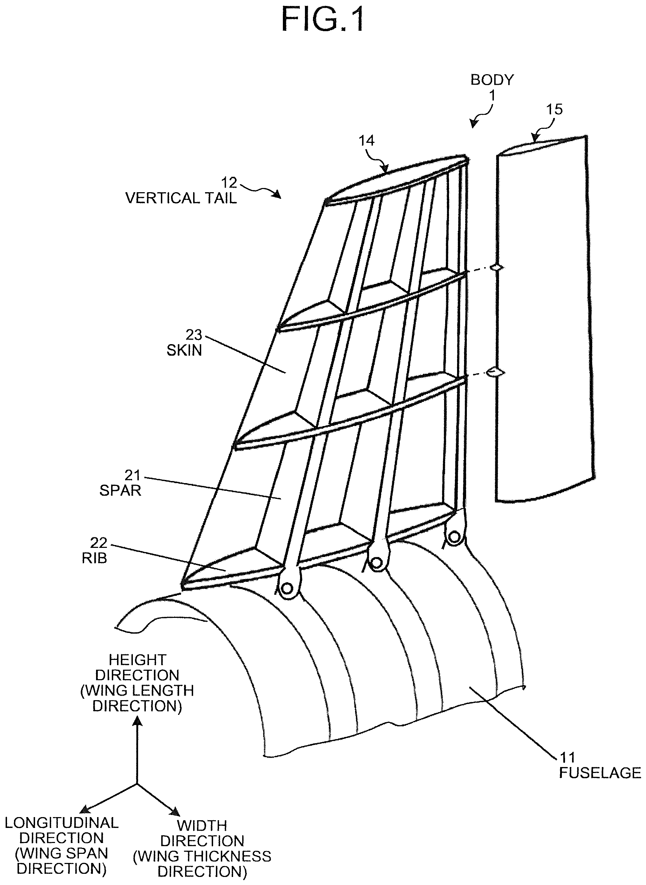

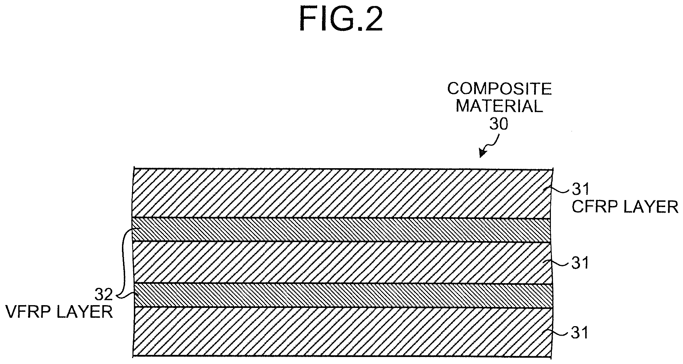

FIG. 1 is an exploded perspective view illustrating an aircraft body around a tail unit to which the method for designing the structure according to the present embodiment is applied. FIG. 2 is a sectional view illustrating the composite material according to the present embodiment.

The structure body is, as illustrated in FIG. 1, a wing body, such as a tail unit of an aircraft in which vibrations are liable to easily occur. To be more specific, a body 1 of the aircraft is provided with a fuselage 11 formed in a cylindrical shape, and a vertical tail 12 attached to the upper portion of the empennage side of the fuselage 11. Here, in the body 1, a direction connecting a nose and an empennage of the fuselage 11 indicates a longitudinal direction, a direction orthogonal to the longitudinal direction, and connecting a left side and a right side of the fuselage 11 indicates a width direction, and a direction orthogonal to the longitudinal direction and the width direction indicates a height direction. Furthermore, in the vertical tail 12, the above-mentioned height direction is a wing length direction, the above-mentioned longitudinal direction is a wing span direction, and the above-mentioned width direction is a wing thickness direction.

The vertical tail 12 includes a vertical stabilizer 14 arranged on the nose side of the fuselage 11, and a rudder 15 arranged on the empennage side of the fuselage 11, the vertical stabilizer 14 is fixed to the fuselage 11, and the rudder 15 is movable in the width direction with respect to the vertical stabilizer 14.

The vertical stabilizer 14 is provided with spars 21, ribs 22, and a skin 23. Each spar 21 is formed to extend in the wing length direction, and the plurality of spars 21 are arranged to be spaced apart at predetermined intervals in the wing span direction. The rib 22, which is a structural material orthogonal to the spar 21, is formed in a predetermined shape that is a wing cross-sectional shape as viewed in a cross-sectional view taken along a plane orthogonal to the wing length direction. Furthermore, each rib 22 is formed to extend in the wing span direction, and the plurality of ribs 22 are arranged to be spaced apart at predetermined intervals in the wing length direction. The outside surface of the skin 23 constitutes the outer surface of the vertical tail 12 (vertical stabilizer 14), and the inside surface of the skin 23 is attached to the spars 21 and the ribs 22. Here, the rudder 15 is similar in configuration to the vertical stabilizer 14, and its explanation is omitted.

In this manner, as a structural member that constitutes the vertical tail 12, the spar 21, the rib 22, and the skin 23 are designated, and each of the structural members is composed of a composite material (first composite material). As the composite material used for the structural member, a carbon fiber reinforced plastics (CFRP) including carbon fibers and a resin is designated. Here, in the present embodiment, although the structural member is composed of the composite material, the present invention is not particularly limited to this example, and the structural member may be, for example, composed of a metallic material, such as an aluminum alloy.

Next, with reference to FIG. 2, the explanation is made with respect to a composite material (second composite material) 30 as a damping material, the composite material 30 being arranged in the vertical tail 12 as a structure body. The composite material 30 is a laminated sheet having CFRP layers 31 each of which is a layer of a carbon fiber reinforced plastic including carbon fibers and a resin, and VFRP layers 32 each of which is a layer of a polyarylate fiber reinforced plastic including polyarylate fibers and a resin, the CFRP layers 31 and the VFRP layers 32 being joined to each other.

As for the VFRP layer 32, for example, VECTRAN (registered trademark) is used as a polyarylate fiber, and an epoxy resin is used as the resin. The VECTRAN fiber reinforced plastic (VFRP) layer 32 formed with the use of VECTRAN is a layer having high strength and high elasticity, and has a vibration control function. One ply of the VFRP layer 32 (one layer) may be used, two or more plies of the VFRP layers 32 (a plurality of layers) may be used, and the number of the VFRP layers 32 is not particularly limited.

The CFRP layer 31 is higher in hardness than the VFRP layer 32, and an epoxy resin is used as a resin as with the case of the VFRP layer 32. Here, as with the case of the VFRP layers 32, one ply of the CFRP layer 31 (one layer) may be used, two or more plies of the CFRP layers 31 (a plurality of layers) may be used, and the number of the CFRP layers 31 is not particularly limited.

The plurality of CFRP layers 31 and the plurality of VFRP layers 32 are arranged in the laminating direction. That is, the composite material 30 has a laminated structure in which the plurality of VFRP layers 32 (two layers in the present embodiment, for example) and the plurality of CFRP layers 31 (three layers in the present embodiment, for example) are alternately arranged next to each other, and the VFRP layers 32 are separately arranged in the laminating direction. Here, the fiber direction of the polyarylate fiber included in each of two VFRP layers 32 is set to a fiber direction designed in the following design method.

The composite material 30 is composed of the CFRP layers 31 and the VFRP layers 32 that are integrally formed. That is, the polyarylate fibers impregnated with a resin before curing and the carbon fibers impregnated with a resin before curing are integrally formed so that a plurality of layers are alternately laminated. Furthermore, the plurality of CFRP layers 31 and the plurality of VFRP layers 32 that are integrally formed with each other are subjected to heat treatment to thermally cure the resin, thus forming the composite material 30.

In the present embodiment, although a laminated sheet in which the CFRP layers 31 and the VFRP layers 32 are alternately laminated next to each other is used as the composite material 30, a composite material made of a VFRP simple substance may be used, and the composite material is not particularly limited provided that the composite material includes a VFRP.

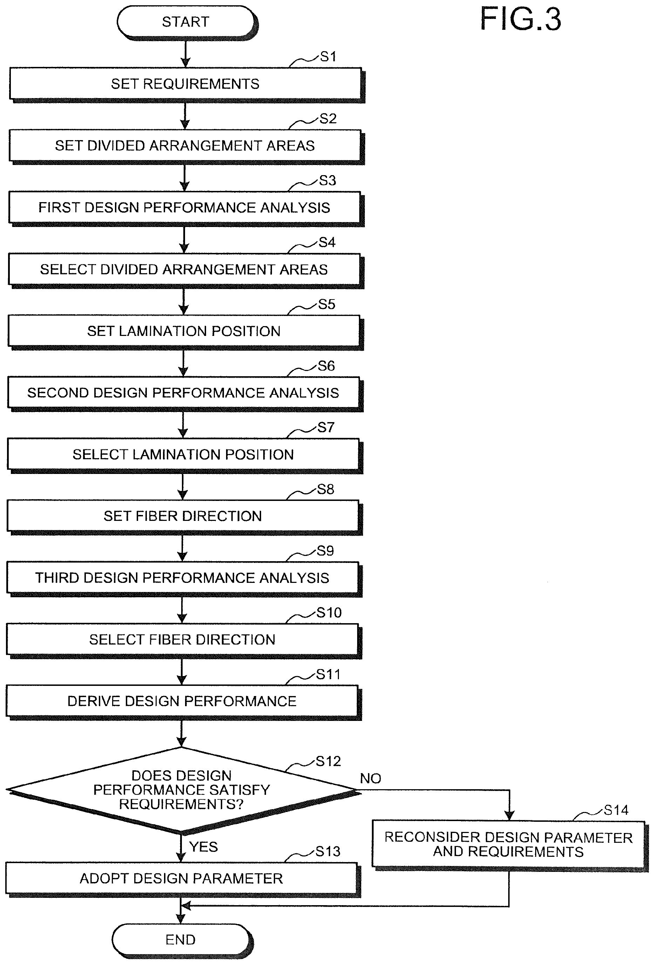

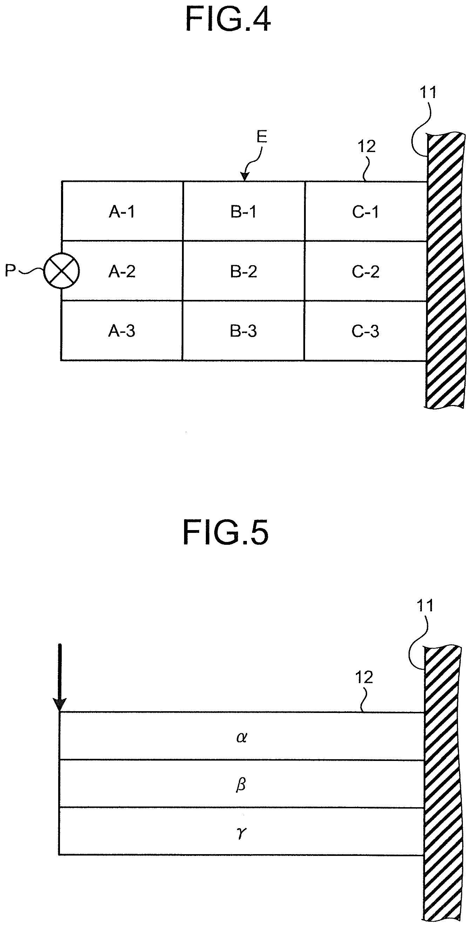

Next, with reference to FIG. 3 to FIG. 5, the explanation is made with respect to the method for designing the structure for arranging the composite material 30 in the vertical tail 12 as a structure body. FIG. 3 is a flowchart with respect to the method for designing the structure according to the present embodiment. FIG. 4 is an explanatory view illustrating a plurality of divided arrangement areas of the wing body according to the present embodiment. FIG. 5 is an explanatory view illustrating lamination positions of the wing body according to the present embodiment. In the present embodiment, although the explanation is made with respect to the case where the composite material 30 is arranged in the vertical tail 12, the structure body is not limited to the vertical tail 12, and any structure may be applied.

Here, the method for designing the structure according to the present embodiment includes a design pattern such that the composite material 30 to be arranged in the vertical tail 12 adheres to a predetermined position in the structural member of the vertical tail 12. In this case, the composite material 30 adheres to the outside surface of the skin 23. Furthermore, the method for designing the structure according to the present embodiment includes a design pattern such that the composite material 30 to be arranged in the vertical tail 12 is used as a structural member of the vertical tail 12. In this case, at least one of the spar 21, the rib 22, and the skin 23 is constituted as with the case of the composite material 30 illustrated in FIG. 2.

The method for designing the structure according to the present embodiment first sets, as illustrated in FIG. 3, performance requirements required for the vertical tail 12 (step S1). Here, the performance requirements include a plurality of performance requirement parameters, and the performance requirement parameters include at least the strength of the vertical tail 12, the rigidity of the vertical tail 12, and the damping factor of the vertical tail 12 with respect to a vibration. Each of the performance requirement parameters is a parameter high in sensitivity with respect to a plurality of design parameters described below.

After the execution of step S1, in a composite material arrangement area E (see FIG. 4) of the vertical tail 12 in which the composite material 30 is arrangeable, divided arrangement areas A-1 to A-3, B-1 to B-3, and C-1 to C-3 each of which is configured to arrange the composite material 30 thereon are set (step S2). Here, as illustrated in FIG. 4, the composite material arrangement area E is an area as viewed in the wing thickness direction of the vertical tail 12, and is divided into the plurality of divided arrangement areas A-1 to A-3, B-1 to B-3, and C-1 to C-3. Here, each of the plurality of divided arrangement areas A-1 to A-3, B-1 to B-3, and C-1 to C-3 that are illustrated in FIG. 4 is one example, and the present invention is not limited to this example.

The plurality of divided arrangement areas A-1 to A-3, B-1 to B-3, and C-1 to C-3 are divided into three areas such that an area including A-1 to A-3, an area including B-1 to B-3, and an area including C-1 to C-3 are arranged in order from the distal-end side of the vertical tail 12 in the wing length direction. Furthermore, the plurality of divided arrangement areas A-1 to A-3, B-1 toB-3, and C-1 to C-3 are divided into three areas such that an area including A-1, B-1, and C-1, an area including A-2, B-2, and C-2, and an area including A-3, B-3, and C-3 are arranged in order from the front side of the vertical tail 12 in the wing span direction. Consequently, the plurality of divided arrangement areas A-1 to A-3, B-1 to B-3, and C-1 to C-3 have nine divided areas.

Furthermore, when the arrangement of the composite material 30 is set to at least one area of the plurality of divided arrangement areas A-1 to A-3, B-1 to B-3, and C-1 to C-3, a design performance of the vertical tail 12 is analyzed (step S3: a first design performance analyzing step). At step S3, each of the divided arrangement areas A-1 to A-3, B-1 to B-3, and C-1 to C-3 that are set at step S2 is set as a design parameter, and FEM analysis is performed with the use of the design parameter as an input parameter thus deriving the design performance. Here, as illustrated in FIG. 4, in the FEM analysis, a vibration excitation point P is set to a position located on the distal-end side of the vertical tail 12 in the wing length direction and the center of the vertical tail 12 in the wing span direction. The position of the vibration excitation point P is one example, and is not particularly limited. For example, the vibration excitation point P may also be set to a position located approximately on an aerodynamic-center position (on one third position from the distal-end side), and may also be set to any position in accordance with a vibration excitation state in an actual vibration test. Furthermore, as a design parameter, there are a lamination position of the composite material 30 in the wing thickness direction of the vertical tail 12, and a fiber direction of the polyarylate fiber of the composite material 30. At step S3, an initial value set as default is input as each of the lamination position and the fiber direction. Here, the lamination position that is defaulted is a lamination position located on one side in the wing thickness direction (a lamination position α described below). Furthermore, the fiber direction of the polyarylate fiber that is defaulted is a direction inclined to make an angle of ±45° with respect to the wing span direction as viewed in a plan view from the wing thickness direction. Furthermore, the analytic model of the vertical tail 12 based on the above-mentioned design parameters is generated, and the design performance with respect to the generated analytic model, when a vibration is applied to the vibration excitation point P; that is, the design performance based on a plurality of design performance parameters including the strength of the vertical tail 12, the rigidity of the vertical tail 12, and the damping factor of the vertical tail 12 with respect to the vibration is derived.

Here, at step S2 and step S3, the design performance is derived while the settings of the plurality of divided arrangement areas A-1 to A-3, B-1 to B-3, and C-1 to C-3 are being changed. To be more specific, at step S2, each of the area including the areas A-1 to A-3, the area including the areas B-1 to B-3, the area including the areas C-1 to C-3, and the area including all of the areas is first set as a plurality of divided arrangement areas. Furthermore, at step S3, the design performance of each area is derived, and the area having the highest design performance is selected. For example, when the selected area is the area including the areas C-1 to C-3, at step S2, the areas C-1 to C-3 are set as a plurality of divided arrangement areas. Furthermore, at step S3, the respective design performances of the areas C-1 to C-3 are derived again.

Here, each of the settings of the divided arrangement areas A-1 to A-3, B-1 to B-3, and C-1 to C-3 at step S2 to Step S4 is one example, and the setting pattern of the divided arrangement areas is not particularly limited. For example, the plurality of divided arrangement areas A-1 to A-3, B-1 to B-3, and C-1 to C-3 may be set one by one to perform the FEM analysis, or all of the combinations of the plurality of divided arrangement areas A-1 to A-3, B-1 to B-3, and C-1 to C-3 may be set to perform the FEM analysis.

Subsequently, when the design performances in a plurality of arrangement patterns are derived at step S3, a divided arrangement area in which the composite material 30 is to be arranged is selected based on each of the derived design performances (step S4: a divided arrangement area selecting step). To be more specific, at step S4, an area of the divided arrangement areas A-1 to A-3, B-1 to B-3, and C-1 to C-3 that has the highest design performance of the vertical tail 12 is selected.

Next, in the selected area of the divided arrangement areas A-1 to A-3, B-1 to B-3, and C-1 to C-3 at step S4, the lamination position of the composite material 30 in the thickness direction of the vertical tail 12 is set (step S5). Here, FIG. 5 is a view as viewed from the wing span direction of the vertical tail 12, and a plurality of lamination positions are set along the wing thickness direction. As illustrated in FIG. 5, the plurality of lamination positions include a lamination position α located on one side in the wing thickness direction of the vertical tail 12, a lamination position γ located on the other side in the wing thickness direction of the vertical tail 12, and a lamination position β located between the lamination position α and the lamination position γ. The lamination position may include an outside-surface lamination position that is a position located on the outside surface of the skin 23 of the vertical tail 12, and an inside lamination position that is a position located inside the structural member of the vertical tail 12. Furthermore, the lamination position may be a position with respect to the wing thickness of the vertical tail 12, or a position with respect to the sheet thickness of the structural member of the vertical tail 12, and the lamination position is not particularly limited.

Furthermore, when the arrangement of the composite material 30 is set to at least one position of the plurality of lamination positions, the design performance of the vertical tail 12 is analyzed (step S6: a second design performance analyzing step). At step S6, one of the divided arrangement areas A-1 to A-3, B-1 to B-3, and C-1 to C-3 that is selected at step S4, the lamination position set at step S5, and a default fiber direction are each set as a design parameter, and the FEM analysis is performed with the use of each design parameter as an input parameter, thus deriving the design performance.

At step S5 and step S6, the design performance is derived while the settings of the lamination positions α to γ are being changed. The setting pattern of the lamination positions α to γ at step S5 is not particularly limited. For example, the plurality of lamination positions α to γ may be set one by one to perform the FEM analysis, and all of the combinations of the plurality of lamination positions α to γ may be set to perform the FEM analysis with respect to each of the combinations.

Subsequently, when the respective design performances with respect to the plurality of lamination positions α to γ are derived at step S6, one of the lamination positions α to γ where the composite material 30 is to be arranged is selected based on the derived design performance (step S7: a lamination position selecting step). To be more specific, at step S7, one of the lamination positions α to γ that has the highest design performance of the vertical tail 12 is selected.

Next, in one of the divided arrangement areas A-1 to A-3, B-1 to B-3, and C-1 to C-3 that is selected at step S4, and one of the lamination positions α to γ that is selected at step S7, the fiber direction of the polyarylate fiber included in the composite material 30 is set (step S8). Here, the fiber direction is indicated by an angle with respect to the wing span direction as viewed in a plan view from the wing thickness direction, and when two VFRP layers 32 are provided, the fiber direction is set to ±30°, ±45°, ±60°, or the like.

Furthermore, when the fiber direction of the composite material 30 is set, the design performance of the vertical tail 12 is analyzed (step S9: a third design performance analyzing step). At step S9, one of the divided arrangement areas A-1 to A-3, B-1 to B-3, and C-1 to C-3 that is selected at step S4, one of the lamination positions that is selected at step S7, and the fiber directions set at step S8 are each set as a design parameter, and the FEM analysis is performed with the use of each design parameter as an input parameter, thus deriving the design performance. Furthermore, at step S8 and step S9, the design performance is derived while the setting of the fiber direction is being changed.

Subsequently, when the design performances in a plurality of fiber directions are each derived at step S9, the fiber direction of the polyarylate fiber of the composite material 30 is selected based on each derived design performance (step S10: a fiber direction selecting step). To be more specific, at step S10, the fiber direction that has the highest design performance of vertical tail 12 is selected.

Furthermore, when the fiber direction is selected at step S10, one of the design parameters including the divided arrangement areas A-1 to A-3, B-1 to B-3, and C-1 to C-3 that is selected at step S4, one of the lamination positions α to γ that is selected at step S7, and the fiber direction selected at step S10 are each set as an input parameter, and the FEM analysis is performed, thus deriving the design performance (step S11).

Next, it is determined whether the design performance of the vertical tail 12 that is derived at step S11 satisfies the performance requirements set at step S1 (step S12: a performance determining step). That is, at step S12, the plurality of performance requirement parameters included in the performance requirements and the plurality of design performance parameters included in the design performance derived by the FEM analysis are compared with each other, and when the parameter value of the design performance parameter is greater than the parameter value of the performance requirement parameter, the method for designing the structure determines that the design performance satisfies the performance requirements (Yes at step S12). On the other hand, at step S12, when the parameter value of the design performance parameter is smaller than the parameter value of the performance requirement parameter, the method for designing the structure determines that the design performance does not satisfy the performance requirements (No at step S12).

When it is determined that the design performance of the vertical tail 12 satisfies the performance requirements (Yes at step S12), one of the divided arrangement areas A-1 to A-3, B-1 to B-3, and C-1 to C-3 that is selected at step S4, one of the lamination positions α to γ that is selected at step S7, and the fiber direction selected at step S10 are each adopted as a design parameter (step S13), and the design of the vertical tail 12 is completed.

When it is determined that the design performance of the vertical tail 12 does not satisfy the performance requirements (No at step S12), the design parameter and the performance requirements are reconsidered (step S14), and the design of the vertical tail 12 is completed. Furthermore, when the processing advances to step S14, step S1 to step S12 are performed again.

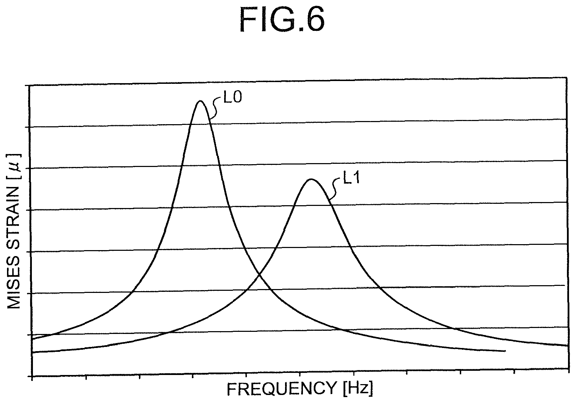

Next, with reference to FIG. 6, the performance of the vertical tail 12 as a structure in which the composite material is not to be arranged, and the performance of the vertical tail 12 as a structure in which the composite material 30 is to be arranged are compared with each other. FIG. 6 is a graph illustrating analysis results obtained by the method for designing the structure according to the present embodiment. In FIG. 6, frequency [Hz] is taken on an axis of abscissa, and Mises strain [µ] is taken on an axis of ordinate.

In FIG. 6, a line L0 indicates the performance of the vertical tail 12 in which the composite material 30 is not arranged, and a line L1 indicates the performance of the vertical tail 12 in which the composite material 30 is arranged. The Mises strain indicated by the line L1 is smaller than that indicated by the line L0 and hence, it is considered that the composite material 30 is arranged in the vertical tail 12 thus improving the damping property of the vertical tail 12 with respect to a vibration. Furthermore, the line L1 is higher in frequency at the peak of the Mises strain than the line L0 and hence, it is considered that the composite material 30 is arranged in the vertical tail 12 thus improving the rigidity of the vertical tail 12.

Next, the explanation is made with respect to one example of the vertical tail 12 as a structure in which the composite material 30 is arranged, the composite material 30 being designed by the above-mentioned method for designing the structure.

When the lamination position selected in the above-mentioned method for designing the structure is the outside-surface lamination position, the composite material 30 adheres to the outside surface of the skin 23 of the vertical tail 12. Furthermore, when the lamination position selected in the above-mentioned method for designing the structure is the inside lamination position of the structural member, the VFRP layer 32 is arranged inside the skin 23 of the vertical tail 12 thus allowing the skin 23 to function as the composite material 30. In addition, when the fiber direction selected in the above-mentioned method for designing the structure is ±60°, the fiber direction of the polyarylate fiber in each of two VFRP layers 32 is set to ±60° with respect to the wing span direction set as a reference (0°). Consequently, the fiber direction of the polyarylate fiber has a vector the magnitude of which is large in the wing length direction of the vertical tail 12, and small in the wing span direction of the vertical tail 12.

As described heretofore, according to the present embodiment, it is possible to select one of the divided arrangement areas A-1 to A-3, B-1 to B-3, and C-1 to C-3, one of the lamination positions α to γ, and the fiber direction that satisfy the performance requirements, thus appropriately arranging the composite material 30 in the vertical tail 12. Consequently, it is possible to appropriately damp the vibration of the vertical tail 12 with the use of the composite material 30, and enhance the damping performance of the vertical tail 12, thus reducing fatigue due to the vibration of the vertical tail 12, and increasing the constant failure rate period of the vertical tail 12. Furthermore, it is possible to prevent the composite material 30 from being excessively arranged in the vertical tail 12, thus suppressing the increase in weight of the vertical tail 12, and also suppressing the increase in weight of the body 1.

Furthermore, according to the present embodiment, it is possible to evaluate a design performance in the case where the composite material 30 is arranged on the outside surface of the skin 23, or the design performance in the case where the composite material 30 is arranged inside a structural member such as the skin 23. Consequently, when the design performance satisfies the performance requirement, for example, it is possible to cause the composite material 30 to adhere to the outside surface of an existing structural member, or arrange the composite material 30 inside the structural member.

Furthermore, according to the present embodiment, the performance requirements include the strength of the vertical tail 12, the rigidity of the vertical tail 12, and the damping factor of the vertical tail 12 with respect to the vibration, thus designing the vertical tail 12 that satisfies the performance requirement parameters above.

Furthermore, according to the present embodiment, it is possible to design a structure so that the VFRP layer 32 that constitutes a damping material can be interposed in the structural member of the vertical tail 12, thus forming the vertical tail 12 in which the CFRP layer 31 and the VFRP layer 32 that are integrally formed with each other are arranged. Consequently, it is possible to acquire the vertical tail 12 having the damping performance.

Furthermore, according to the present embodiment, it is possible to design a structure so that the VFRP layers 32 each of which constitutes a damping material can be separately arranged in the thickness direction of the structural member, thus suppressing the increase in rigidity difference between the CFRP layer 31 and the VFRP layer 32 in comparison with the case where the VFRP layers 32 are laminated with each other to be thickened. Furthermore, the VFRP layers 32 are formed in such a manner that the respective fiber directions of the polyarylate fibers of the VFRP layers 32 are properly made to be different from each other thus adjusting the property of the VFRP layer 32, such as isotropy or anisotropic.

Furthermore, according to the present embodiment, it is possible to design the composite material 30 that constitutes a damping material so that the composite material 30 can adhere to the outside surface of the structural member of the vertical tail 12, thus forming the vertical tail 12 having a damping performance, with a simple configuration.

Furthermore, according to the present embodiment, it is possible to design the fiber direction of the polyarylate fiber that has a vector the magnitude of which is large in the wing length direction of the vertical tail 12, and small in the wing span direction of the vertical tail 12. Consequently, it is possible to set the fiber direction of the polyarylate fiber to the direction along the wing length direction of the vertical tail 12, thus appropriately exhibiting a function of the composite material 30 as a damping material for the vertical tail 12.

Here, although the present embodiment is applied to a structure of the aircraft, the present embodiment is not limited to this example, and may be applied to a structure of the other device.

In addition, in the present embodiment, although the divided arrangement area selecting step S4, the lamination position selecting step S7, and the fiber direction selecting step S10 are performed in this order, the order of the divided arrangement area selecting step S4, the lamination position selecting step S7, and the fiber direction selecting step S10 may be changed properly, and the order of the processes above is not particularly limited.

### Reference Signs List

1 Body
11 Fuselage
12 Vertical tail
14 Vertical stabilizer
15 Rudder
21 Spar
22 Rib
23 Skin
30 Composite material
31 CFRP layer
32 VFRP layer
E Composite material arrangement area
A-1 to A-3, B-1 to B-3, C-1 to C-3 Divided arrangement areas
α to γ Lamination positions
P Vibration excitation point

## Claims

1. A method for designing a structure in which a composite material including fibers and a resin is arranged as a damping material in a structure body, the method comprising:
a first design performance analyzing step of analyzing a design performance of the structure when the composite material is arranged in at least one of a plurality of divided arrangement areas into which a composite material arrangement area of the structure in which the composite material is arrangeable is divided, performance requirements required for the structure being set in advance;
a divided arrangement area selecting step of selecting the divided arrangement area in which the composite material is to be arranged, based on analysis results of the first design performance analyzing step;
a second design performance analyzing step of analyzing a design performance of the structure when the composite material is arranged in each of lamination positions different from each other in a thickness direction of the structure;
a lamination position selecting step of selecting the lamination position where the composite material is to be arranged, based on analysis results of the second design performance analyzing step;
a third design performance analyzing step of analyzing a design performance of the structure when the composite material is arranged with a fiber direction of the fibers included in the composite material different;
a fiber direction selecting step of selecting the fiber direction of the fibers based on analysis results of the third design performance analyzing step; and
a performance determining step of determining whether a design performance of the structure satisfies the performance requirements, the design performance being derived from design parameters including at least the divided arrangement area selected at the divided arrangement area selecting step, the lamination position selected at the lamination position selecting step, and the fiber direction selected at the fiber direction selecting step.

2. The method for designing the structure according to claim 1, wherein the damping material includes polyarylate fibers as the fibers.

3. The method for designing the structure according to claim 1 or 2, wherein
at the second design performance analyzing step, the composite material is arranged in the lamination positions different from each other in the divided arrangement area selected at the divided arrangement area selecting step, and
at the third design performance analyzing step, the fiber direction of the fibers is different in the divided arrangement area selected at the divided arrangement area selecting step and in the lamination position selected at the lamination position selecting step.

4. The method for designing the structure according to any one of claims 1 to 3, wherein
the lamination positions include
an outside-surface lamination position that is a position located on the outside surface of a structural member constituting the structure, and
an inside lamination position that is a position located inside the structural member.

5. The method for designing the structure according to any one of claims 1 to 4, wherein
the performance requirements include a plurality of performance requirement parameters, and
the plurality of performance requirement parameters include at least one of a strength of the structure, a rigidity of the structure, and a damping factor of the structure with respect to a vibration.

6. A structure comprising:
a structure body composed of a first composite material, and
a second composite material arranged in the structure body, the second composite material including fibers and a resin, wherein
the second composite material is interposed in the first composite material as a damping material.

7. The structure according to claim 6, wherein
a plurality of the second composite materials are spaced apart from each other at predetermined intervals in a thickness direction of the first composite material, and
fiber directions of the fibers of the plurality of second composite materials intersect each other.

8. A structure comprising:
a structure body composed of a first composite material, and
a second composite material arranged in the structure body, the second composite material including fibers and a resin, wherein
the second composite material is arranged on an outside surface of the first composite material as a damping material.

9. The structure according to any one of claims 6 to 8, wherein the damping material includes polyarylate fibers as the fibers.

10. The structure according to any one of claims 6 to 9, wherein
the structure is a wing body, and
a fiber direction of the fibers included in the second composite material has a vector whose magnitude is large in a wing length direction of the wing body, and small in a wing span direction orthogonal to the wing length direction.

## Amended claims

### Amended claims under Art. 19.1 PCT

1. A method for designing a structure in which a composite material including fibers and a resin is arranged as a damping material in a structure body, the method comprising:
a first design performance analyzing step of analyzing a design performance of the structure when the composite material is arranged in at least one of a plurality of divided arrangement areas into which a composite material arrangement area of the structure in which the composite material is arrangeable is divided, performance requirements required for the structure being set in advance;
a divided arrangement area selecting step of selecting the divided arrangement area in which the composite material is to be arranged, based on analysis results of the first design performance analyzing step;
a second design performance analyzing step of analyzing a design performance of the structure when the composite material is arranged in each of lamination positions different from each other in a thickness direction of the structure;
a lamination position selecting step of selecting the lamination position where the composite material is to be arranged, based on analysis results of the second design performance analyzing step;
a third design performance analyzing step of analyzing a design performance of the structure when the composite material is arranged with a fiber direction of the fibers included in the composite material different;
a fiber direction selecting step of selecting the fiber direction of the fibers based on analysis results of the third design performance analyzing step; and
a performance determining step of determining whether a design performance of the structure satisfies the performance requirements, the design performance being derived from design parameters including at least the divided arrangement area selected at the divided arrangement area selecting step, the lamination position selected at the lamination position selecting step, and the fiber direction selected at the fiber direction selecting step.

2. The method for designing the structure according to claim 1, wherein the damping material includes polyarylate fibers as the fibers.

3. The method for designing the structure according to claim 1 or 2, wherein
at the second design performance analyzing step, the composite material is arranged in the lamination positions different from each other in the divided arrangement area selected at the divided arrangement area selecting step, and
at the third design performance analyzing step, the fiber direction of the fibers is different in the divided arrangement area selected at the divided arrangement area selecting step and in the lamination position selected at the lamination position selecting step.

4. The method for designing the structure according to any one of claims 1 to 3, wherein
the lamination positions include
an outside-surface lamination position that is a position located on the outside surface of a structural member constituting the structure, and
an inside lamination position that is a position located inside the structural member.

5. The method for designing the structure according to any one of claims 1 to 4, wherein
the performance requirements include a plurality of performance requirement parameters, and
the plurality of performance requirement parameters include at least one of a strength of the structure, a rigidity of the structure, and a damping factor of the structure with respect to a vibration.

6. (Cancelled)

7. (Cancelled)

8. (Cancelled)

9. (Cancelled)

10. (Cancelled)
